# EUROPÄISCHE PATENTSCHRIFT

(11) **EP 2 421 802 B1**
(45) Veröffentlichungstag und Bekanntmachung des Hinweises auf die Patenterteilung: **16.07.2014**
(21) Anmeldenummer: 10720536.1
(22) Anmeldetag: 22.04.2010
(51) Int. Cl.: C03B 23/045, C03B 23/055

(54) **VERFAHREN UND VORRICHTUNGEN ZUR HERSTELLUNG VON OPTISCHEN GLASELEMENTEN, INSBESONDERE KONZENTRATOROPTIKEN**
METHOD AND DEVICES FOR PRODUCING OPTICAL GLASS ELEMENTS, PARTICULARLY CONCENTRATOR OPTICS
PROCÉDÉ ET DISPOSITIFS POUR FABRIQUER DES ÉLÉMENTS EN VERRE OPTIQUES, NOTAMMENT DES ÉLÉMENTS OPTIQUES DE CONCENTRATEUR

(30) Priorität: 22.04.2009 DE 102009018203
(43) Veröffentlichungstag der Anmeldung: 29.02.2012
(73) Patentinhaber: SCHOTT AG, 55122 Mainz (DE)
(72) Erfinder: SCHENK, Christian, 55128 Ingelheim (DE); FOTHERINGHAM, Ulrich, 65191 Wiesbaden (DE)
(74) Vertreter: Herden, Andreas F.
(86) Internationale Anmeldenummer: PCT/EP2010/002462
(87) Internationale Veröffentlichungsnummer: WO 2010/121809

(56) Entgegenhaltungen:
- EP-A1- 1 387 188
- EP-A2- 1 369 392
- DE-A1- 10 244 041
- DE-T2- 69 412 906
- US-A- 3 306 723
- US-A- 3 860 408

## Beschreibung

### Beschreibung der Erfindung

Die vorliegende Erfindung betrifft ein Verfahren und eine Vorrichtung zur Herstellung von optischen Glaselementen, insbesondere zur Herstellung von sogenannten "Low-Cost-Optiken" zum Konzentrieren von Licht auf kleine Flächen, etwa für photovoltaische Anwendungen oder optische Koppler.

### Hintergrund der Erfindung

Optische Glaselemente hoher Präzision werden im Stand der Technik zum Beispiel durch Schneiden, Schleifen und anschließendes Polieren aus einem aus optischen Glas bestehenden Block gewonnen. Dies ist jedoch ein zeit- und kostenintensives Verfahren. Zudem treten zusätzliche Probleme bei der Herstellung miniaturisierter optischer Glaselemente auf. Denn zum einen ist deren Handhabung erschwert. Zum anderen ist eine ausreichende Genauigkeit der optisch maßgeblichen Eigenschaften nur unter erheblichem arbeits- und daher auch kostenintensiven Aufwand möglich. Kantenschärfe, Kantenwinkel, Ebenheit der Oberflächen und geringe Rauigkeit der Oberflächen bestimmen maßgeblich die Qualität eines optischen Glaselements.

Ein anderes Verfahren zur Herstellung von optischen Glaselementen ist das sogenannte Blankpressen, das zum Beispiel in der DE 10 2005 050 087 A1 beschrieben wird. Zum Blankpressen wird ein sogenannter Formblock verwendet. Ein solcher Formblock zum Blank- bzw. Präzisionspressen optischer Bauteile aus Glas weist im Allgemeinen eine Oberform und eine Unterform auf. In dem Formblock wird ein viskoser Glasposten zwischen Ober- und Unterform heissgeformt. Dazu wird ein erhitzter Vorformling aus Glas mit einer geeigneten Viskosität in die gegebenenfalls erhitzte Form eingebracht. Der Vorformling wird bis zu einer geeigneten Viskosität innerhalb des Formblocks erhitzt, durch Pressen verformt und abgekühlt. Ein Vorteil blankgepresster Bauteile liegt darin, dass die optisch aktiven Flächen nicht mehr nachbearbeitet werden müssen, so dass nachträgliche Arbeitsgänge wie Schleifen und Polieren entfallen können.

Mittels Blankpressen können zwar optische Glaselemente hoher Präzision, zum Beispiel mit einer Oberflächengüte von 1 µm (Peak-to-Valley) hergestellt werden. Das Verfahren ist jedoch nicht geeignet für eine Massenproduktion. Zudem ist eine solche Güte nicht für alle Anwendungen erforderlich. Zum Beispiel ist eine Beleuchtungsoptik für einen Scheinwerfer, wie ein Konzentrator, mit einer deutlich verminderten Güte immer noch ausreichend.

Das Dokument DE 694 12 906 T2 zeigt ein Verfahren, bei welchem Glaspolyeder mittels eines Ziehverfahrens aus einem Stab hergestellt werden. Das Dokument EP 1 387 188 A1 zeigt ein Verfahren zur Herstellung optischer Linsen. Das Dokument US 3,306,723 zeigt eine Vorrichtung zum Heißpressen von Glas. Das Dokument DE 102 44 041 A1 zeigt eine Umformvorrichtung für einen Glasstrang.

### Allgemeine Beschreibung der Erfindung

Vor diesem Hintergrund hat sich die vorliegende Erfindung daher zur Aufgabe gestellt, ein Verfahren und eine Vorrichtung bereitzustellen, welche die Nachteile des Standes der Technik wenigstens vermindern.

Insbesondere soll es möglich sein, optische Glaselemente geringer Qualitätsanforderung in hohen Stückzahlen und mit hohem Ausstoß zu geringen Kosten herzustellen.

Gelöst wird diese Aufgabe bereits durch das Verfahren und die Vorrichtung gemäß einem der unabhängigen Patentansprüche. Vorteilhafte Ausführungsformen sind Gegenstand der jeweiligen Unteransprüche.

Die Erfindung betrifft zum einen ein Verfahren zur Herstellung von optischen Glaselementen umfassend die folgenden Verfahrensschritte
- Bereitstellen eines Glasstabs eines gewählten Querschnitts,
- Erhitzen des Glasstabs, so dass dieser abschnittsweise oder zumindest abschnittsweise verformbar ist,
- Formen eines oder wenigstens eines optischen Glaselements aus dem verformbaren Abschnitt mit einem Formwerkzeug, insbesondere so dass das geformte optische Glaselement mit dem Glasstab verbunden bleibt,
- Trennen des optischen Glaselements von dem Glasstab an der Verbindung zu dem Glasstab,
- Anordnen einer Vielzahl von getrennten optischen Glaselemente zu einer Gruppe,
- Schleifen und/oder Polieren der Trennflächen oder zumindest eines Abschnitts der Trennflächen der gruppierten optischen Glaselemente.

Gemäß der Erfindung wird das Formwerkzeug so stark erwärmt, dass die Kontaktflächen des optischen Glaselements durch das Formwerkzeug feuerpoliert werden, indem die Oberfläche des optischen Glaselements soweit erwärmt wird, dass sich die plastisch-zähe Glasoberfläche infolge der Oberflächenspannung verkleinert und dadurch blank wird.

Zudem liegt im Rahmen der vorliegenden Erfindung auch eine Anlage zur Herstellung von optischen Glaselementen umfassend
- eine Aufnahmeeinrichtung mit Aufnahmebereichen für Glasstäbe aus optischen Glas,
- eine Einrichtung zum Zuführen der Glasstäbe in die Aufnahmebereiche,
- eine Bearbeitungseinheit aus zumindest
einer Heizeinrichtung zum Erhitzen der Glasstäbe in einem ersten Bearbeitungsbereich, so dass die Glasstäbe abschnittsweise oder zumindest abschnittsweise verformbar sind,
einem Formwerkzeug zum Formen eines oder wenigstens eines optischen Glaselements aus dem verformbaren Abschnitt in einem zweiten Bearbeitungsbereich,

Mittel zum Trennen des optischen Glaselements von dem Glasstab in einem dritten Bearbeitungsbereich,
wobei die Aufnahmeeinrichtung bewegbar zu der Bearbeitungseinheit ist, so dass die Glasstäbe taktweise zu der Heizeinrichtung, dem Formwerkzeug und dem Mittel zum Trennen führbar sind,
- eine Einrichtung zur Aufnahme einer Vielzahl von optischen Glaselementen, so dass eine Gruppe von optischen Glaselementen zusammenstellbar oder zusammengestellt ist und
- Schleif- und/oder Poliermittel zum Schleifen und/oder Polieren der Trennflächen oder zumindest eines Abschnitts der Trennflächen der gruppierten optischen Glaselemente.

Das Formwerkzeug weist gemäß der Erfindung Mittel auf, um so stark erwärmt zu werden, dass die Kontaktflächen des optischen Glaselements durch das Formwerkzeug feuerpoliert werden, indem die Oberfläche des optischen Glaselements soweit erwärmt wird, dass sich die plastisch-zähe Glasoberfläche infolge der Oberflächenspannung verkleinert und dadurch blank wird.

Die Erfindung wird auch beschrieben durch eine Anlage zur Herstellung von optischen Glaselementen umfassend
- eine Einrichtung zum Zuführen eines Glasstabs aus optischem Glas in einen Bearbeitungsbereich,
- eine Heizeinrichtung zum Erhitzen des Glasstabs, so dass der Glasstab in dem Bearbeitungsbereich abschnittsweise oder zumindest abschnittsweise verformbar ist,
- eine Bearbeitungseinheit aus wenigstens
   einem Formwerkzeug zum Formen eines oder zumindest eines optischen Glaselements aus dem verformbaren Abschnitt in dem Bearbeitungsbereich und
   Mittel zum Trennen des zumindest einen optischen Glaselements von dem Glasstab in dem Bearbeitungsbereich,
   wobei die Bearbeitungseinheit bewegbar zu dem Glasstab ist, so dass das Formwerkzeug und das Mittel zum Trennen taktweise in den Bearbeitungsbereich führbar sind,
- eine Einrichtung zur Aufnahme einer Vielzahl von getrennten optischen Glaselementen, so dass eine Gruppe von optischen Glaselementen gebildet wird und
- Schleif- und/oder Poliermittel zum Schleifen und/oder Polieren der Trennflächen oder zumindest eines Abschnitts der Trennflächen der gruppierten optischen Glaselemente.

Das Formwerkzeug weist gemäß der Erfindung Mittel auf, um so stark erwärmt zu werden, dass die Kontaktflächen des optischen Glaselements durch das Formwerkzeug feuerpoliert werden, indem die Oberfläche des optischen Glaselements soweit erwärmt wird, dass sich die plastisch-zähe Glasoberfläche infolge der Oberflächenspannung verkleinert und dadurch blank wird.

In einer ersten Ausführungsform ist die Heizeinrichtung ein Bestandteil der Bearbeitungseinheit. In dieser Variante wären somit die Heizeinrichtung, das Formwerkzeug und das Mittel zum Trennen taktweise in den Bearbeitungsbereich führbar. In einer alternativen Ausführungsform ist die Heizeinrichtung Bestandteil einer Vorrichtung zur Herstellung von optischen Glaselementen über einen Ziehprozeß umfassend die genannte Einrichtung zum Zuführen, die Heizvorrichtung und eine Ziehvorrichtung.

Die Anlagen sind insbesondere ausgebildet zur Ausführung des erfindungsgemäßen Verfahrens. Das Verfahren ist insbesondere ausführbar mittels der erfindungsgemäßen Anlagen.

Der Glasstab kann auch als Glasbarren bezeichnet werden. Er besitzt eine gegenüber seinem Durchmesser deutlich größere aber endliche Länge. In Abhängigkeit von der Länge eines hergestellten Glasstabs erfolgt zunächst ein Anpassen der Länge des bereitzustellenden Glasstabs. Vorzugsweise wird der Glasstab nach seiner Herstellung in seinem abgekühlten Zustand bereitgestellt.

In einer ersten Variante der Erfindung wird der Glasstab durch ein "Urformen" hergestellt. Der Glasstab wird durch Gießen einer Glasschmelze in eine Form und anschließendes Abkühlen bzw. Erhärten erhalten. In einer alternativen Ausführungsform wird der Glasstab durch ein sogenanntes "Stabziehverfahren" hergestellt. Dabei wird im Allgemeinen ein Glasstrang aus einer Wannenschmelze senkrecht oder waagerecht abgezogen.

Um eine besonders effiziente Herstellung der optischen Glaselemente zu gewährleisten, ist der Querschnitt des bereitgestellten Glasstabs in seiner Geometrie und/oder Fläche derart gewählt, dass dieser an den Querschnitt des zu formenden optischen Glaselements angepasst ist. Sofern es erforderlich sein sollte, erfolgt daher in einer Ausgestaltung der Erfindung vor dem Formen und/oder dem Erwärmen zunächst ein Annähern oder Anpassen des Glasstabs in seinem Querschnitt an den Querschnitt des zu formenden optischen Glaselements. Um zum Beispiel einen kleineren Querschnitt zu erhalten, erfolgt in einer Ausgestaltung vor dem Formen zunächst ein Verjüngen des Glasstabs in seinem Querschnitt durch ein Ziehverfahren oder "Wiederziehen". Bei einem Ziehverfahren wird der Glasstab einer Heizvorrichtung zugeführt. Dabei wird das Glas soweit erhitzt, bis es plastisch verformbar ist. Durch eine Ziehvorrichtung wird der erweichte Glasstab aus der Heizvorrichtung unter Ausbildung einer Ziehzwiebel abgezogen. Durch den Ziehvorgang wird der Glasstab in seinem Querschnitt gezielt reduziert.

Zu einer effizienten Herstellung der optischen Glaselemente sollte auch der Trennvorgang des optischen Glaselements von dem Glasstab möglichst zeit- und daher kostenreduziert ablaufen. Daher wird in einer bevorzugten Ausgestaltung der Erfindung das Trennen der optischen Glaselemente durch ein "Ritzbrechen" und/oder "thermisches Sprengen" durchgeführt.

Um die Oberflächen des geformten optischen Bauteils zu vergüten, erfolgt ein Polieren der Seitenflächen des optischen Glaselements. Das Polieren erfolgt durch Feuerpolieren. Um hierbei wiederum eine besonders effiziente Herstellung zu gewährleisten, werden die Seitenflächen des optischen Glaselements durch das Formwerkzeug selbst feuerpoliert. Die Seitenflächen werden während des Formvorgangs auch feuerpoliert. Eine Nachbehandlung der Seitenflächen ist dann nicht mehr erforderlich.

Im Gegensatz zu den polierten Seitenfläche, welche im Allgemeinen nicht mehr nachgearbeitet werden müssen, ist jedoch eine Nachbearbeitung der Trennflächen, insbesondere aufgrund des "Ritzbrechens" und/oder des "thermischen Sprengens", erforderlich. Erfindungsgemäß erfolgt daher das gemeinsame Polieren und/oder Schleifen der Trennflächen der optischen Glaselemente. Im Allgemeinen besitzt das optische Glaselement sowohl eine obere Trennfläche als auch eine untere Trennfläche. Um auch diese Bearbeitung möglichst

effizient zu machen, werden in einer Weiterbildung der Erfindung die obere Trennfläche und die untere Trennfläche der gruppierten optischen Glaselemente gleichzeitig oder gemeinsam poliert und/oder geschliffen.

Das optische Glaselement ist ein Glaselement beliebiger geeigneter Geometrie. Das optische Glaselement ist zum Beispiel ein Konzentrator, ein optischer Koppler, ein polygonförmiges Prisma, eine Linse, eine Stablinse und/oder ein Glaselement mit konvexen, konkaven, sphärischen oder asphärischen, beispielsweise elliptischen, zylindrischen oder parabolischen Oberflächen. Die vorstehend genannten Glaselemente sind beispielhaft zu verstehen und beschränken sich keinesfalls auf die genannte Auswahl. Die Erfindung beansprucht auch ein optisches Glaselement, das herstellbar oder hergestellt ist mit dem erfindungsgemäßen Verfahren.

Das optische Glas kann ein beliebiges optisches Glas sein. Bei dem optischen Glas kann es sich beispielsweise um zumindest eines der folgenden Gläser handeln: Fluor-Kron-Gläser, Phosphor-Kron-Gläser, Phosphor-Schwer-Kron-Gläser, Bor-Kron-Gläser, Barium-Leicht-Kron-Gläser, Kron-Gläser, Zink-Kron-Gläser, Barium-Kron-Gläser, Schwer-Kron-Gläser, Kron-Flint-Gläser, Barium-Leicht-Flint-Gläser, Doppel-Schwer-Kron-Gläser, Lanthan-Kron-Gläser, Doppel-Leicht-Flint-Gläser, Barium-Flint-Gläser, Leicht-Flint-Gläser, Flint-Gläser, Barium-Schwer-Flint-Gläser, Lanthan-Flint-Gläser, Lanthan-Schwer-Flint-Gläser, Schwer-Flint-Gläser, Tief-Kron-Gläser, Tief-Flint-Gläser, Lang-Kron-Sondergläser, Tief-Schwer-Flint-Gläser, Kurz-Flint-Gläser, Kurz-Flint-Sondergläser.

Die vorliegende Erfindung wird anhand der nachfolgenden Ausführungsbeispiele im Einzelnen erläutert. Hierzu wird auf die beigefügten Zeichnungen Bezug genommen. Die gleichen Bezugszeichen in den einzelnen Zeichnungen beziehen sich auf die gleichen Elemente.

### Figurenbeschreibung

Figuren 1 bis 8 illustrieren die einzelnen Schritte einer beispielhaften Ausführungsform des erfindungsgemäßen Verfahrens.
Figur 9 zeigt ein mit dem erfindungsgemäßen Verfahren herstellbares oder hergestelltes optisches Glaselement.
Figuren 10 bis 12 zeigen jeweils eine Vorrichtung zur Ausführung des erfindungsgemäßen Verfahrens in einer schematischen Darstellung.

Ein Ziel der vorliegenden Erfindung ist die Herstellung von sogenannten "Low-Cost-Optiken". "Low-Cost-Optiken" sind optische Glaselemente 13 oder optische Bauelemente , welche in großen Stückzahlen mit hohem Ausstoß kostengünstig herzustellen sind und an die hinsichtlich ihrer Qualität keine allzu großen Anforderungen gestellt werden. Für die Stirnflächen 13a oder 13b oder Seitenflächen 13c ist zum Beispiel eine Ebenheit mit einer Genauigkeit von etwa 50 bis etwa 250 µm (Peak-to-Valley) oder sogar schlechter ausreichend. Insbesondere zielt die Erfindung ab auf die Herstellung von optischen Bauelementen zum Konzentrieren von Licht auf kleine Flächen, wie zum Beispiel für photovoltaische Anwendungen und/oder optische Koppler.

Das erfindungsgemäße Verfahren basiert auf der "Kopplung" einer Heißnachverarbeitung mit einer Kaltnachverarbeitung. Vorzugsweise werden die optischen Bauteile 13 dabei im Rahmen der Heißnachverarbeitung und Kaltnachverarbeitung in einem vollständig kontinuierlichen Prozess hergestellt.

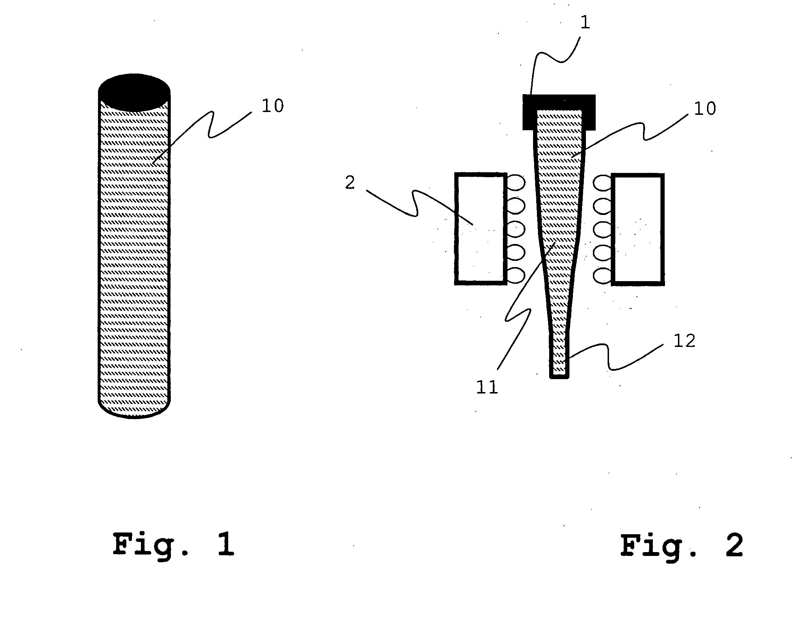

Es erfolgt eine Fertigung mit Stäben bzw. Glasstäben 10 als Ausgangsprodukt. Die Glasstäbe 10 werden sozusagen "direkt" aus der Schmelze bereitgestellt. Figur 1 illustriert hierbei den ersten Schritt zur Herstellung der optischen Glaselemente 13. Der Glasstab 10 wird bereitgestellt.

Eine Möglichkeit zur Fertigung der Glasstäbe 10 stellt eine Heißformgebung, wie zum Beispiel ein "Stabziehverfahren", dar, bei dem ein Glasstrang aus einer Wannenschmelze senkrecht oder waagerecht abgezogen wird. Diese Variante ist recht kostengünstig, da der Glasstab 10 mit einem kontinuierlichen Verfahren bereitgestellt wird.

Als Alternative kann der Glasstab 10 auch durch ein "Urformen" gefertigt werden. Hierbei wird der Glasstab 10 als ein Rohglas, wie ein Barrenglas, bereitgestellt. Dazu wird ein Glasbarren 10 oder ein Glasstab 10 aus einer Glasschmelze durch Gießen hergestellt. Das stellt ein diskontinuierliches Verfahren dar. Das Rohglas kann dann zu Stäben geschnitten und optional in seinem Querschnitt "rondiert" sein.

Der bereitgestellte Glasstab 10 besitzt vorzugsweise einen mittleren Durchmesser in einer Größenordnung von etwa 20 mm bis etwa 100 mm. Die Länge kann prinzipiell beliebig gewählt werden. Je nach Auslegung der Anlage sind jedoch Längen von etwa 0,5 m bis etwa 2 m anzuwenden. Als Glas kann ein beliebiges optisches Glas ausgewählt werden. Vorzugsweise ist der Glasstab 10 ein Vollmaterial. Ein Hohlmaterial kann jedoch auch verwendet werden. In einer bevorzugten Variante der Erfindung ist der Querschnitt des bereitgestellten Glasstabs 10 bereits an den Querschnitt des zu bildenden optischen Glaselements 13 angepasst. Vorliegend ist der Querschnitt des Glasstabs 10 beispielhaft rund oder kreisförmig dargestellt. Er kann aber auch vieleckig oder abschnittsweise vieleckig oder abschnittsweise rund sein. Das Urformen ist vorteilhaft, da durch eine entsprechende Auswahl der Gießform der Querschnitt, vorzugsweise die Querschnittsfläche und/oder die Querschnittsgeometrie, gezielt vorgegeben werden kann.

Sofern es erforderlich sein sollte, können die gefertigten Glasstäbe 10 mit geringen Kosten nachverarbeitet werden. Eine Anpassung der Querschnittsgeometrie kann durch eine Kaltnachverarbeitung, zum Beispiel Sägen, erfolgen, was jedoch recht arbeits- und daher kostenintensiv ist. Sofern zum Beispiel ein kleinerer Querschnitt bereitgestellt werden soll, vorzugsweise mit einem mittleren Enddurchmesser von kleiner als 20 mm, kann optional ein Ziehen oder sogenanntes "Wiederziehen" des Glasstabs 10 erfolgen. Hierbei wird der bereitgestellte Glasstab 10 mit einer Einrichtung zum Zuführen 1 einer Heizeinrichtung 2 zugeführt. Das Glas wird soweit erhitzt, bis es plastisch verformbar ist. Durch eine Zieheinrichtung wird der verformbare Glasstab 10 aus der Heizeinrichtung unter Ausbildung einer Ziehzwiebel 11 abgezogen und der Glasstab 10 in seinem Querschnitt gezielt reduziert. Das Ziehen dient hierbei ausschließlich der Verjüngung des Querschnitts. Dies ist in Figur 2 illustriert. Die Zieheinrichtung ist aus Gründen einer besseren Übersicht nicht in der Figur dargestellt.

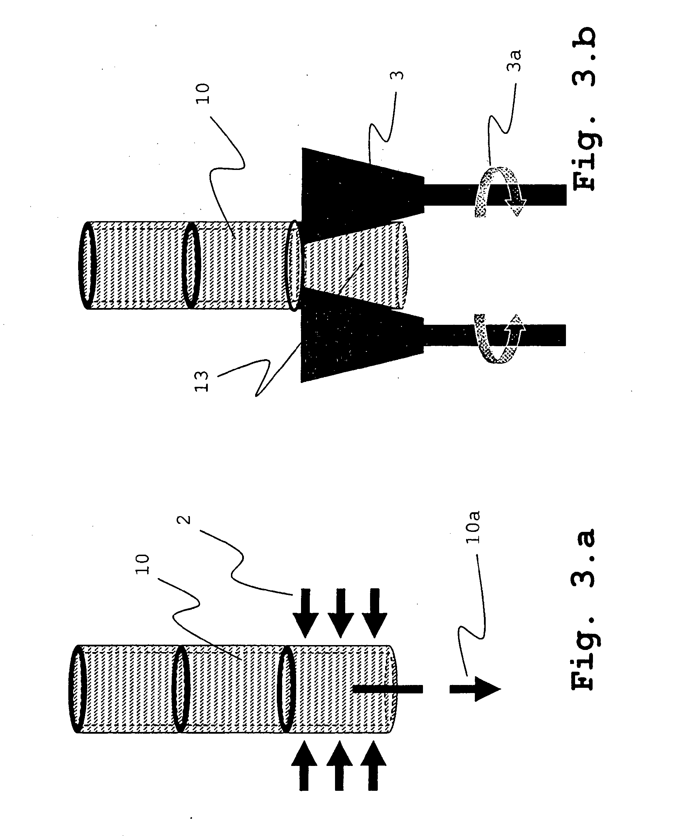

In einem nächsten bzw. ersten Bearbeitungsschritt erfolgt erfindungsgemäß zunächst die Heißnachverarbeitung. Eine erste Ausführungsform der Heißnachverarbeitung ist in den Figuren 3.a und 3.b illustriert. Der Glasstab 10 wird abschnittsweise erwärmt. Im Detail wird wenigstens der Abschnitt erwärmt, aus dem, insbesondere in einem nachfolgenden Schritt, das optische Glaselement 13 geformt wird. Die Erwärmung kann zum Beispiel durch Gasbrenner 2 erfolgen, die um den Glasstab 10 herum positioniert sind. Diese sind durch die Pfeile 2 angedeutet (Figur 3.a). Der Glasstab 10 wird abschnittsweise so stark erwärmt, dass zumindest dieser erwärmte Abschnitt oder wenigstens ein Teil dieses Abschnitts verformbar ist. Zum Beispiel wird das optische Glaselement 13 durch eine plastische Verformung aus dem erwärmten Abschnitt des Glasstabs 10 gebildet. Dazu wird ein Formwerkzeug 3 verwendet. Das Formwerkzeug 3 wird vorliegend durch zwei Kegelstümpfe als Negativform gebildet. Diese werden um den Glasstab 10 herum bewegt. Es erfolgt somit zunächst das Erwärmen und dann das Formen. Vorzugsweise ist auch das Formwerkzeug 3 erwärmt.

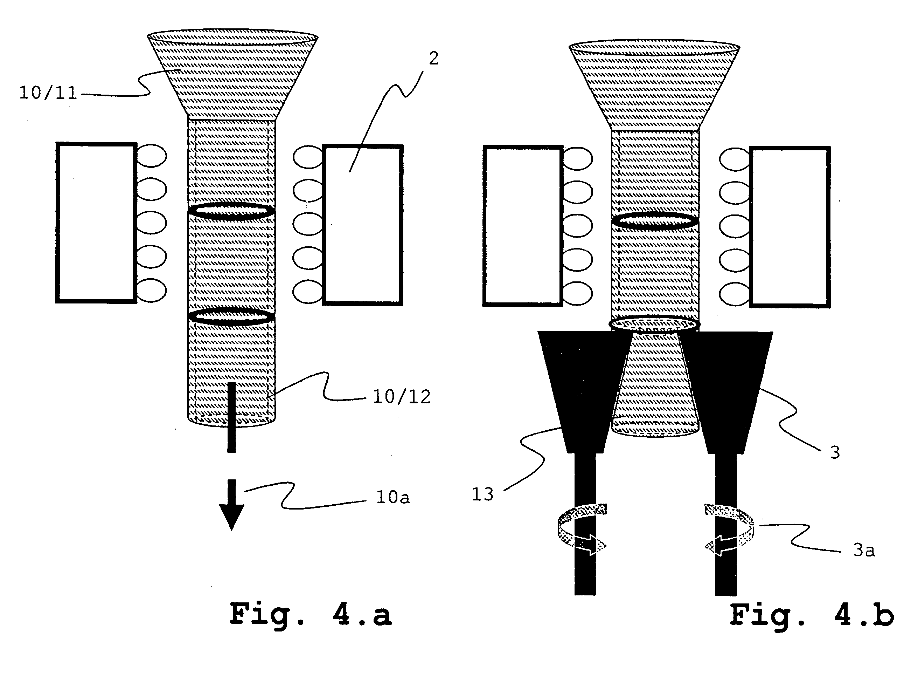

Ein alternatives Verfahren der Heißnachverarbeitung stellt das "Ziehen" oder "Wiederziehen" dar, das in den Figuren 4.a und 4.b illustriert ist. Der bereitgestellte Glasstab 10 wird einer Heizeinrichtung 2 zugeführt. Das Glas wird soweit erhitzt, bis es plastisch verformbar ist. Durch eine nicht dargestellte Zieheinrichtung wird der verformbare Glasstab 10 aus der Heizeinrichtung 2 unter Ausbildung einer Ziehzwiebel 11 abgezogen und der Glasstab 10 in seinem Querschnitt gezielt reduziert, wobei die optischen Glaselemente 13 aus bzw. an dem verjüngten Glasstab 12 geformt werden. D.h. das Formen erfolgt an dem verjüngten Ende der Ziehzwiebel 11 oder unmittelbar nach dem Ziehen. Für Details zur Figur 4.b sei auf die vorstehenden Ausführungen zur Figur 3.b verwiesen.

Gemäß der Erfindung wird das Formwerkzeug 3 dabei so stark erwärmt (siehe hierzu die Figuren 3.b und 4.b), dass die Seitenflächen 13c des optischen Glaselements 13 bzw. die Kontaktflächen des optischen Glaselements 13 zum Formwerkzeug 3 feuerpoliert werden. Bei der Feuerpolitur wird das optische Glaselement 13 oder die Oberfläche des optischen Glaselements 13 soweit erwärmt, dass sich die plastisch-zähe Glasoberfläche infolge der Oberflächenspannung verkleinert und dadurch blank wird. Dabei kann auch unter Umständen auf das vorige Erwärmen verzichtet werden, so dass Erwärmen und Formen oder das Erwärmen, Formen und Feuerpolieren gleichzeitig erfolgen. Das optische Glaselement 13 wird an dem Glasstrang 10 geformt oder gebildet. Vorliegend bleibt das optische Glaselement 13 nach der Formung mit dem Glasstrang 13, hier über seine Stirnfläche 13a, verbunden. Die Seite bzw. die Seiten, über welche die Verbindung zu dem benachbarten Glaselement 13 oder zu dem Glasstab 10 bestand, wird bzw. werden auch als Stirnfläche 13a oder 13b bzw. Stirnflächen oder Trennfläche bzw. Trennflächen bezeichnet.

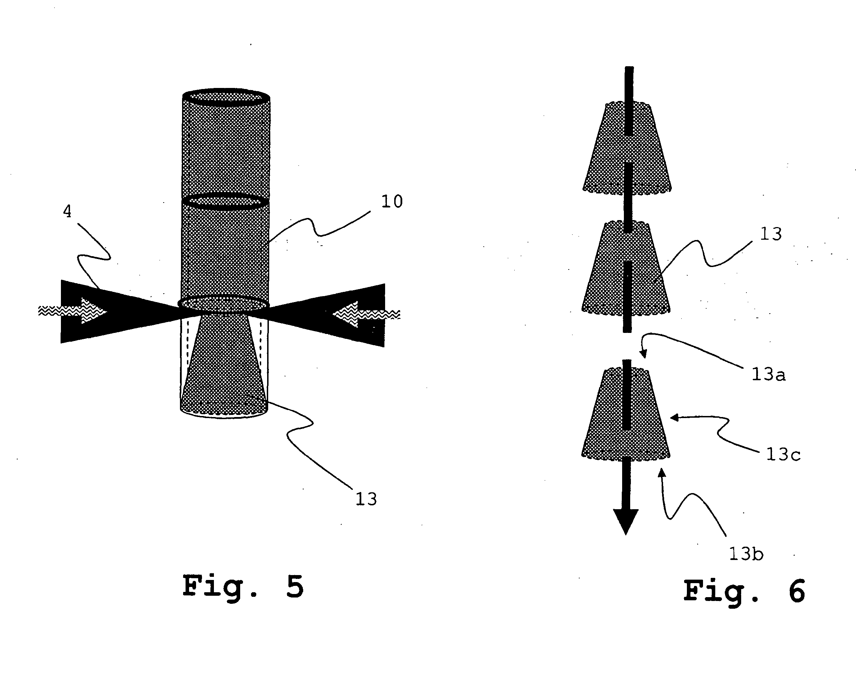

In einem nächsten Schritt erfolgt das Abtrennen des geformten optischen Glaselements 13 von dem Glasstab 10 oder das sogenannte Vereinzeln der optischen Glaselemente 13. Das ist in Figur 5 illustriert. Vorzugsweise wird aus Kostengründen ein sogenanntes "plastisches" Trennverfahren verwendet. Beispiele stellen hierfür das "Ritzbrechen" oder das "thermische Sprengen" dar. Beim "Ritzbrechen" wird durch ein Anritzen eine Sollbruchstelle erzeugt. In der Figur ist dagegen das "thermische Sprengen" angedeutet. Die noch heiße Verbindung zwischen dem optischen Glaselement 13 und dem Glasstab 10 wird lokal durch eine Kühleinrichtung 4, zum Beispiel durch Luft oder einen Luftstrahl, gekühlt. Durch das lokale Kühlen wird in dem Glas ein definiertes und örtlich begrenztes Spannungsprofil erzeugt. Ausgehend von einem Startriss wird das Glas durch Führen des Risses mit dem Luftstrahl in einem Arbeitsgang getrennt. Die Kühleinrichtung 4 kann als eine zum Beispiel mit Luft durchströmte Rohre, als ein sogenannte Kühlfinger, ausgebildet sein. Das Trennen ist hier noch Bestandteil der Heißnachverarbeitung. Ein zeit- und kostenintensives Trennverfahren wie Sägen kann damit vermieden werden.

Die vereinzelten optischen Glaselemente 13 als Vorprodukte sind in der Figur 6 dargestellt. Das vorstehend genannte Trennverfahren resultiert jedoch in Stirnflächen 13a und 13b geringer Qualität. Dies macht eine Nachbearbeitung der Stirnflächen 13a und 13b der abgetrennten optischen Glaselemente 13 erforderlich. Daher erfolgt in einem nachfolgenden Schritt, als ein Bestandteil der Kaltnachverarbeitung, ein Schleifen und/oder Polieren. Im Detail erfolgt ein Schleifen und/oder Polieren der, möglichst planen, Stirnflächen 13a und 13b, die nach der Heißnachverarbeitung "beliebig" vereinzelt und daher ungeformt sind.

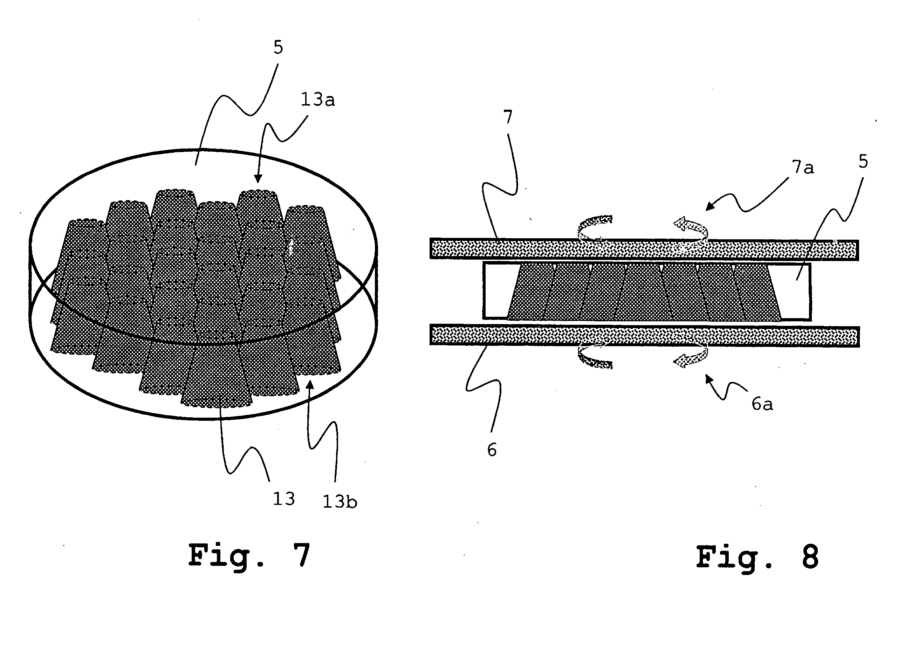

Die sich anschließende Kaltnachverarbeitung ist in den Figuren 7 und 8 gezeigt. Um eine besonders kostengünstige Herstellung zu erzielen, wird eine Vielzahl von optischen Glaselementen 13 gemeinsam geschliffen und/oder poliert. Dazu wird eine Vielzahl von optischen Glaselementen 13 in einer Aufnahmeeinrichtung 5 zu einem Array positioniert oder gruppiert. Dies ist in Figur 7 illustriert. Um einen stabilen Verbund beim Schleifen und/oder Polieren zu erhalten, werden die optischen Glaselemente 13 optional noch miteinander, insbesondere trennbar, verklebt oder verkittet.

In der in Figur 8 dargestellten Ausführungsform werden die obere Stirnfläche 13a und die untere Stirnfläche 13b gleichzeitig poliert und/oder geschliffen. Das Schleifen und/oder Polieren wird vorliegend mit mechanischen Mitteln bewirkt. Als ein Beispiel ist eine Schleifscheibe bzw. Polierscheibe 6 und 7 angedeutet. Das Polieren kann auch über eine Säurepolitur und/oder eine Feuerpolitur erfolgen. Um eine besonders kostengünstige Herstellung zu erzielen, erfolgt jedoch vorzugsweise keine Nachbearbeitung der Längsseiten 13c. Die feuerpolierten Oberflächen der Längsseiten 13c werden beibehalten.

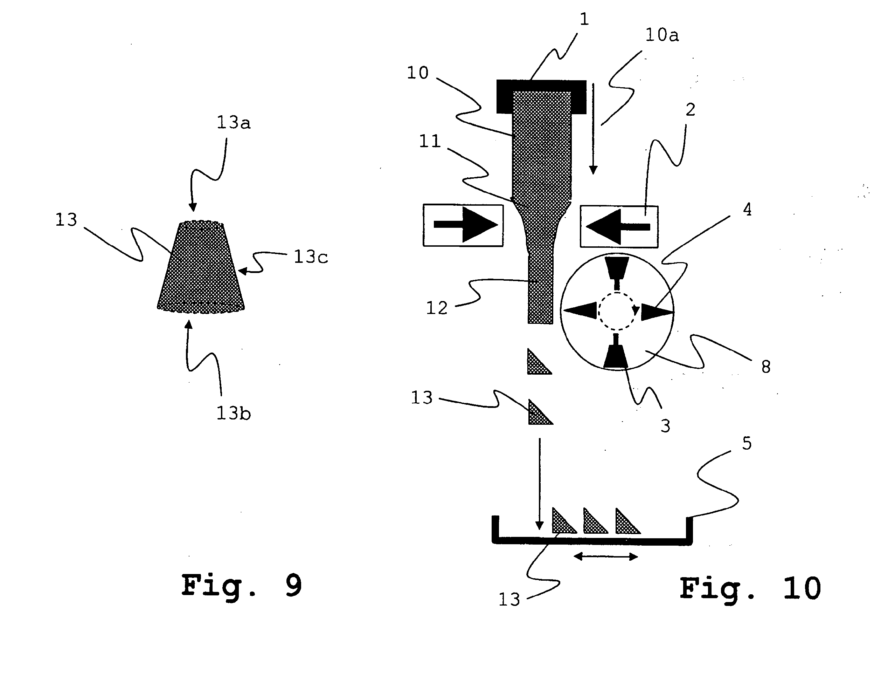

Das Endprodukt ist ein kostengünstig hergestelltes optisches Glaselement 13. In Figur 9 ist als eine mögliche Ausführung eines erfindungsgemäß hergestellten optischen Glaselements 13 ein optischer Konzentrator, der auch als Konzentratoroptik bezeichnet wird, illustriert. Der dargestellte Konzentrator besitzt aus Gründen einer vereinfachten Darstellung die Gestalt eines Kegelstumpfs. Der Konzentrator kann auch, insbesondere abschnittsweise, die Gestalt eines Paraboloids besitzen. Eine weitere mögliche, jedoch nicht in den Figuren dargestellte, Ausgestaltung eines optischen Glaselements 13 stellt ein optischer Koppler dar.

Prinzipiell gibt es keine Beschränkung auf bestimmte Querschnitte. Um jedoch eine besonders einfache Bearbeitung zu ermöglichen, wären folgende Anforderungen an die Geometrie vorteilhaft: konisch oder zylindrisch, insbesondere mit weiteren, vorzugsweise umlaufenden Konturen. Das optische Glaselement 13 sollte im Wesentlichen rotationssymmetrisch und/oder in länglicher Form sein. Die Länge der optischen Glaselemente 13 liegt dabei in einer Größenordnung von etwa 0,2 cm bis etwa 10 cm.

Während die vorstehend beschriebenen Figuren 1 bis 8 im Wesentlichen das der Erfindung zugrunde liegende Prinzip illustrieren, zeigen die Figuren 10 bis 12 hierzu jeweils eine Anlage oder Vorrichtung zur Ausführung des erfindungsgemäßen Verfahrens. Die in den Figuren 10 bis 12 gewählte Symbolik orientiert sich an den in vorigen Figuren verwendeten Symbolen. Die einzelnen Vorrichtungen oder Stationen zur Ausführung des Verfahrens, insbesondere der in den Figuren 3 bis 6 gezeigten Verfahrensschritte, sind in einer ersten Ausführung der Erfindung auf einem Karussell 8 oder einer Rotationseinrichtung 8 montiert. In einer Variante sind dagegen die Glasstäbe 10 auf einem Karussell 8 und die Stationen um das Karussell 8 herum angeordnet. In beiden Varianten werden die Glasstäbe 10 und die Stationen relativ zueinander bewegt. Die kostengünstige Herstellung der optischen Glaselemente 13 ist dadurch gewährleistet.

Figur 10 zeigt eine beispielhafte Anlage in einer Seitenansicht und bezieht sich im Wesentlichen auf das in den Figuren 4.a und 4.b illustrierte "alternative" Verfahren der Heißnachverarbeitung. Eine Einrichtung zum Abziehen des Glasstabs 10 ist in der Figur nicht dargestellt. Der bereitgestellte Glasstab 10 wird durch die Einrichtung zum Zuführen 1 einer Heizvorrichtung 2, beispielsweise einer sogenannten Heizmuffel, und dem Bearbeitungsbereich zugeführt. Das Glas wird durch die Heizvorrichtung 2 soweit erhitzt, bis es plastisch verformbar und in dem Bearbeitungsbereich durch eine Bearbeitungseinheit verarbeitbar ist. Der Bearbeitungsbereich definiert sich durch den Bereich, in dem der Glasstab 10 bearbeitet wird. Der Bearbeitungsbereich schließt vorliegend die Heizeinrichtung 2 und den sich unterhalb anschließenden Bereich, in dem das optische Glaselement 13 geformt und abgetrennt wird, ein. Die Bearbeitungseinheit wird hier gebildet durch zwei Formwerkzeuge 3 und zwei Mittel zum Trennen 4. Das Mittel zum Trennen 4 oder die Einrichtung zum Trennen 4 ist ausgebildet als eine Kühleinrichtung.

Die Bearbeitungseinheit ist auf einem Karussell 8 angeordnet. Der Drehsinn ist durch einen Pfeil in der Mitte des Karussells 8 angedeutet. Das Formwerkzeug 3 und das Mittel zum Trennen 4 wird in den bzw. zu dem Bearbeitungsbereich geführt oder gedreht. Das Formen der optischen Glaselemente 13 erfolgt an dem verjüngten Ende der ausgebildeten "Ziehzwiebel" 11 oder unmittelbar nach dem Ziehen. Durch ein Zuführen des erweichten Glasstabs 10 in den Bearbeitungsbereich und ein angepasstes taktweises Drehen des Karussells 8 wird aus dem erweichten Ende des Glasstabs 10 zunächst das optische Glaselement 13 geformt. Das geformte optische Glaselement 13 wird dann in einem nächsten Schritt abgetrennt.

In dem dargestellten Beispiel fallen die gefertigten optischen Glaselemente 13 nach dem Abtrennen in eine Aufnahmeeinrichtung 5. Diese ist seitlich verschiebbar, so dass eine Gruppe von optischen Glaselementen 13 gebildet werden kann. Die seitliche Bewegung ist durch den Doppelpfeil angedeutet. Die gebildete Gruppe kann dann zusammen nachbearbeitet, wie zum Beispiel poliert und/oder geschliffen, werden. Ebenfalls können die abgetrennten optischen Glaselemente 13 auch durch einen in den Figuren nicht dargestellten Greifer in der Aufnahmeeinrichtung 5 positioniert werden.

Die gewählte vertikale Orientierung des Karussells 8 und die gewählte Anzahl von zwei Formwerkzeugen 3 und von zwei Trennmitteln 4 auf dem Karussell 8 sind aus Gründen einer vereinfachten Darstellbarkeit gewählt. Eine horizontale Anordnung und/oder eine Vielzahl an Formwerkzeugen 3 und/oder Trennmitteln 4 ist bzw. sind ebenso möglich.

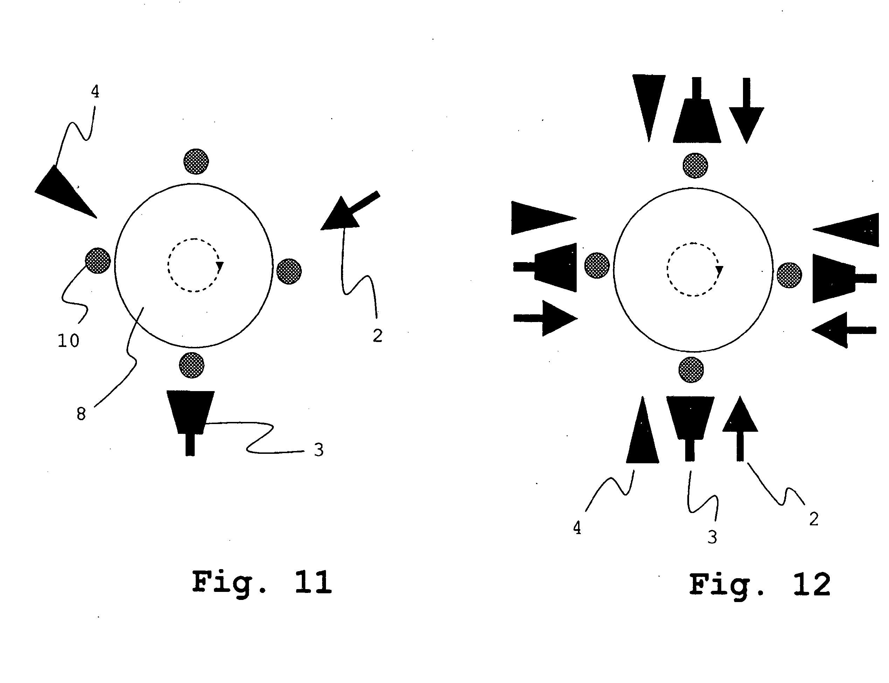

Die Figuren 11 und 12 zeigen eine Ausführungsform, bei der die Glasstäbe 10 bewegt werden. Die Bearbeitungseinheiten sind nun ortsfest. Die dort gezeigten Anlagen können auch als ein sogenannter "Rundläufer" bezeichnet werden.

Figur 11 zeigt eine Anlage oder einen "Rundläufer" in einer Aufsicht. Die Anlage umfasst ein Karussell 8, das auch als Aufnahmeeinheit bezeichnet wird, welches eine Vielzahl von Aufnahmebereichen für eine Vielzahl von Glasstäben 10 besitzt. Eine Einrichtung zum Zuführen der Glasstäbe 10, die in der Figur nicht dargestellt ist, ist beispielsweise oberhalb des Karussells 8 angeordnet. Die einzelnen Glasstäbe 10 fallen in die einzelnen Stationen oder Aufnahmebereiche. Diese sind vorliegend über den Umfang des Karussells 8 verteilt. Zum Laden der verschiedenen Stationen wird das Karussell 8 taktweise jeweils um eine Station weiter gedreht. Im Lauf einer 360°-Drehung werden dabei die einzelnen Schritte des Verfahrens ausgeführt. Der Drehsinn ist durch den Pfeil in der Mitte des Karussells 8 angedeutet.

Die Bearbeitungseinheit wird vorliegend gebildet durch die Heizeinrichtung 2, das Formwerkzeug 3 und das Mittel zum Trennen 4, vorzugsweise ausgebildet als Kühleinrichtung. Die Bearbeitungseinheit ist bzw. die genannten Bestandteile sind über den Umfang des Karussells 8 verteilt. Sie sind ortsfest angeordnet. Es werden im Bereich der Heizeinrichtung 2 ein erster Bearbeitungsbereich, im Bereich des Formwerkzeugs 3 ein zweiter Bearbeitungsbereich und im Bereich des Trennmittels 4 ein dritter Bearbeitungsbereich gebildet. Die Glasstäbe 10 werden durch eine Drehbewegung des Karussells 8 nacheinander zur Heizeinrichtung 2, zum Formwerkzeug 3 und zum Trennmittel 4 bzw. zum jeweiligen Bearbeitungsbereich geführt oder taktweise geführt.

Das Glas wird durch die Heizvorrichtung 2 in dem ersten Bearbeitungsbereich soweit erhitzt, bis es plastisch verformbar ist. Daraufhin wird der verformbare Glasstab 10 dem Formwerkzeug 3 zugeführt. Das optische Glaselement 13 wird in dem zweiten Bearbeitungsbereich gebildet. Dann wird das gebildete optische Glaselement 13 der Kühleinrichtung 4 zugeführt. Es wird in dem dritten Bearbeitungsbereich abgetrennt. Die gefertigten optischen Glaselemente 13 fallen nach dem Trennen zum Beispiel nach unten in eine in der Figur nicht dargestellte Einrichtung zur Aufnahme der Glaselemente 13.

Nach dem Trennvorgang kann in einem nächsten Schritt der nun verkürzte Glasstab 10 nach unten oder in die Ebene der Bearbeitung bewegt werden, so dass in einem nächsten Takt oder Schritt das "neue" bzw. freigelegte Ende des Glasstabs 10 bearbeitet werden kann. Der Bearbeitungszyklus beginnt von vorne.

Figur 12 entspricht im Wesentlichen der Figur 11. Im Unterschied zu Figur 11 sind hier nun mehrere, hier zum Beispiel vier, Bearbeitungseinheiten um das Karussell 8 herum angeordnet. Dadurch können in einem einzelnen Umlauf mehrere Bearbeitungsschritte ausgeführt und mehrere optische Glaselemente 13 hergestellt werden.

Es ist dem Fachmann ersichtlich, dass die vorstehend beschriebenen Ausführungsformen beispielhaft zu verstehen sind. Die Erfindung ist nicht auf diese beschränkt sondern kann in vielfältiger Weise variiert werden. Merkmale einzelner Ausführungsformen und die im allgemeinen Teil der Beschreibung genannten Merkmale können jeweils untereinander als auch miteinander kombiniert werden.

### Bezugszeichenliste

- 1: Einrichtung zum Zuführen
- 2: Heizeinrichtung
- 3: Formwerkzeug oder Mittel zum Formen
- 3a: Bewegungsrichtung des Formwerkzeugs
- 4: Mittel zum Trennen oder Kühleinrichtung
- 5: Einrichtung zur Aufnahme der optischen Glaselemente
- 6: Polier- und/oder Schleifmittel
- 6a: Bewegungsrichtung des Polier- und/oder Schleifmittels
- 7: Polier- und/oder Schleifmittel
- 7a: Bewegungsrichtung des Polier- und/oder Schleifmittels
- 8: Karussell oder Rotationseinrichtung oder Aufnahmeeinrichtung mit Aufnahmebereichen
- 10: Glasstab oder Glasbarren
- 10a: Bewegungsrichtung oder Ziehrichtung des Glasstabs
- 11: Ziehzwiebel
- 12: Verjüngter Glasstab
- 13: Optisches Glaselement
- 13a: Obere Stirnfläche oder Trennfläche des optischen Glaselements
- 13b: Untere Stirnfläche oder Trennfläche des optischen Glaselements
- 13c: Seitenfläche oder Längsseite des optischen Glaselements

## Patentansprüche

1. Verfahren zur Herstellung von optischen Glaselementen (13) umfassend die folgenden Verfahrensschritte
- Bereitstellen eines Glasstabs (10) eines gewählten Querschnitts,
- Erhitzen des Glasstabs (10), so dass dieser zumindest abschnittsweise verformbar ist,
- Formen wenigstens eines optischen Glaselements (13) aus dem verformbaren Abschnitt mit einem Formwerkzeug (3), wobei das Formwerkzeug so stark erwärmt wird, dass die Kontaktflächen des optischen Glaselements (13) durch das Formwerkzeug (3) feuerpoliert werden, indem die Oberfläche des optischen Glaselements (13) soweit erwärmt wird, dass sich die plastisch-zähe Glasoberfläche infolge der Oberflächenspannung verkleinert und dadurch blank wird,
- Trennen des optischen Glaselements (13) von dem Glasstab (10) an der Verbindung,
- Anordnen einer Vielzahl von getrennten optischen Glaselementen (13) zu einer Gruppe,
- Schleifen und/oder Polieren zumindest eines Abschnitts der Trennflächen (13a, 13b) der gruppierten optischen Glaselemente (13).

2. Verfahren nach vorstehendem Anspruch **dadurch gekennzeichnet, dass** der Glasstab (10) durch ein Urformen hergestellt wird.

3. Verfahren nach einem der vorstehenden Ansprüche **dadurch gekennzeichnet, dass** der Glasstab (10) durch ein Stabziehverfahren hergestellt wird.

4. Verfahren nach einem der vorstehenden Ansprüche **gekennzeichnet durch** ein Annähern des Glasstabs (10) in seinem Querschnitt an den Querschnitt des zu formenden optischen Glaselements (13).

5. Verfahren nach einem der vorstehenden Ansprüche **gekennzeichnet durch** ein Verjüngen des Glasstabs (10) in seinem Querschnitt **durch** ein Ziehverfahren.

6. Verfahren nach einem der vorstehenden Ansprüche **dadurch gekennzeichnet, dass** das Trennen der optischen Glaselemente (13) von dem Glasstab (10) durch Ritzbrechen und/oder thermisches Sprengen durchgeführt wird.

7. Verfahren nach einem der vorstehenden Ansprüche **dadurch gekennzeichnet, dass** eine obere Trennfläche (13c) und eine untere Trennfläche (13b) der gruppierten optischen Glaselemente (13) gleichzeitig poliert und/oder geschliffen werden.

8. Anlage zur Herstellung von optischen Glaselementen (13) umfassend
- eine Aufnahmeeinrichtung (8) mit Aufnahmebereichen für Glasstäbe (10) aus optischen Glas,
- eine Einrichtung zum Zuführen (1) der Glasstäbe (10) in die Aufnahmebereiche,
- eine Bearbeitungseinheit aus zumindest
einer Heizeinrichtung (2) zum Erhitzen der Glasstäbe (10) in einem ersten Bearbeitungsbereich, so dass die Glasstäbe (10) zumindest abschnittsweise verformbar sind,
einem Formwerkzeug (3) zum Formen wenigstens eines optischen Glaselements (13) aus dem verformbaren Abschnitt in einem zweiten Bearbeitungsbereich, wobei das Formwerkzeug Mittel aufweist, um so stark erwärmt zu werden, dass die Kontaktflächen des optischen Glaselements (13) durch das Formwerkzeug (3) feuerpoliert werden, indem die Oberfläche des optischen Glaselements (13) soweit erwärmt wird, dass sich die plastisch-zähe Glasoberfläche infolge der Oberflächenspannung verkleinert und dadurch blank wird,
Mittel zum Trennen (4) des optischen Glaselements (13) von dem Glasstab (10) in einem dritten Bearbeitungsbereich,
wobei die Aufnahmeeinrichtung (8) bewegbar zu der Bearbeitungseinheit ist, so dass die Glasstäbe (10) taktweise zu der Heizeinrichtung (2), dem Formwerkzeug (3) und dem Mittel zum Trennen (4) führbar sind,
- eine Einrichtung zur Aufnahme (5) einer Vielzahl von optischen Glaselementen (13), so dass eine Gruppe von optischen Glaselementen (13) zusammenstellbar ist und
- Schleif- und/oder Poliermittel (6, 7) zum Schleifen und/oder Polieren zumindest eines Abschnitts der Trennflächen (13a, 13b) der gruppierten optischen Glaselemente (13).

9. Anlage zur Herstellung von optischen Glaselementen (13) umfassend
- eine Einrichtung zum Zuführen (1) eines Glasstabs (10) aus optischem Glas in einen Bearbeitungsbereich,
- eine Heizeinrichtung (2) zum Erhitzen des Glasstabs (10), so dass der Glasstab (10) in dem Bearbeitungsbereich zumindest abschnittsweise verformbar ist,
- eine Bearbeitungseinheit aus wenigstens
einem Formwerkzeug (3) zum Formen zumindest eines optischen Glaselements (13) aus dem verformbaren Abschnitt in dem Bearbeitungsbereich, wobei das Formwerkzeug Mittel aufweist, um so stark erwärmt zu werden, dass die Kontaktflächen des optischen Glaselements (13) durch das Formwerkzeug (3) feuerpoliert werden, indem die Oberfläche des optischen Glaselements (13) soweit erwärmt wird, dass sich die plastisch-zähe Glasoberfläche infolge der Oberflächenspannung verkleinert und dadurch blank wird, und
Mittel zum Trennen (4) des optischen Glaselements (13) von dem Glasstab (10) in dem Bearbeitungsbereich, wobei die Bearbeitungseinheit bewegbar zu dem Glasstab (10) ist, so dass das Formwerkzeug (3) und das Mittel zum Trennen (4) taktweise in den Bearbeitungsbereich führbar sind,
- eine Einrichtung zur Aufnahme (5) einer Vielzahl von getrennten optischen Glaselementen (13), so dass eine Gruppe von optischen Glaselementen (13) gebildet wird und
- Schleif- und/oder Poliermittel (6, 7) zum Schleifen und/oder Polieren zumindest eines Abschnitts der Trennflächen (13a, 13b) der gruppierten optischen Glaselemente (13).

## Claims

1. A method for producing optical glass elements (13), comprising the method steps of:
- providing a glass rod (10) of a selected cross section;
- heating said glass rod (10) until it is deformable at least in portions thereof;
- shaping at least one optical glass element (13) from the deformable portion using a molding tool (3), wherein the molding tool is heated to such an extent that the contact surfaces of the optical glass element (13) are fire-polished by the molding tool (3) by heating the surface of the optical glass element (13) to the extent that the plastic-viscous glass surface decreases due to surface tension and thereby becomes bright;
- separating the optical glass element (13) from the glass rod (10) at the joint;
- grouping a plurality of separated optical glass elements (13);
- grinding and/or polishing at least a portion of the separation surfaces (13a, 13b) of the grouped optical glass elements (13).

2. The method according to the preceding claim, **characterized in that** the glass rod (10) is produced by a primary shaping.

3. The method according to any of the preceding claims, **characterized in that** the glass rod (10) is produced by a rod drawing process.

4. The method according to any of the preceding claims, **characterized by** approximating the cross section of the glass rod (10) to the cross section of the optical glass element (13) to be shaped.

5. The method according to any of the preceding claims, **characterized by** thinning the cross section of the glass rod (10) by a drawing process.

6. The method according to any of the preceding claims, **characterized in that** the separating of the optical glass elements (13) from the glass rod (10) is performed by scoring and breaking and/or by thermal blasting.

7. The method according to any of the preceding claims, **characterized in that** an upper separation surface (13c) and a lower separation surface (13b) of the grouped optical glass elements (13) are polished and/or grinded concurrently.

8. A system for producing optical glass elements (13), comprising:
- an accommodation means (8) having accommodation areas for glass rods (10) made of optical glass;
- means for feeding (1) the glass rods (10) into the accommodation areas;
- a processing unit including at least heating means (2) for heating the glass rods (10) within a first processing area to such an extent that the glass rods (10) are deformable at least in portions thereof;
a molding tool (3) for shaping at least one optical glass element (13) from the deformable portion within a second processing area, the molding tool having means for being heated to such an extent that the contact surfaces of the optical glass element (13) are fire-polished by the molding tool (3) since the surface of the optical glass element (13) is heated to the extent that the plastic-viscous glass surface decreases due to surface tension and thereby becomes bright;
means for separating (4) the optical glass element (13) from the glass rod (10) within a third processing area;
wherein the accommodation means (8) are movable relative to the processing unit, so that the glass rods (10) can be moved to the heating means (2), the molding tool (3), and the separating means (4) in indexed manner;
- means for accommodating (5) a plurality of optical glass elements (13) so that optical glass elements (13) can be arranged into a group; and
- grinding and/or polishing means (6, 7) for grinding and/or polishing at least a portion of the separation surfaces (13a, 13b) of the grouped optical glass elements (13).

9. A system for producing optical glass elements (13), comprising:
- means for feeding (1) a glass rod (10) made of optical glass to a processing area;
- heating means (2) for heating the glass rod (10) to such an extent that the glass rod (10) is deformable at least in portions thereof within said processing area;
- a processing unit including at least
a molding tool (3) for shaping at least one optical glass element (13) from the deformable portion within said processing area, the molding tool having means for being heated to such an extent that the contact surfaces of the optical glass element (13) are fire-polished by the molding tool (3) since the surface of the optical glass element (13) is heated to the extent that the plastic-viscous glass surface decreases due to surface tension and thereby becomes bright; and
means for separating (4) the optical glass element (13) from the glass rod (10) within said processing area;
wherein the processing unit is movable relative to the glass rod (10), so that the molding tool (3) and the means for separating (4) can be moved into the processing area in indexed manner;
- means for accommodating (5) a plurality of separated optical glass elements (13) so that a group of optical glass elements (13) is formed; and
- grinding and/or polishing means (6, 7) for grinding and/or polishing at least a portion of the separation surfaces (13a, 13b) of the grouped optical glass elements (13).

## Revendications

1. Procédé de fabrication d'éléments optiques en verre (13), comprenant les étapes suivantes :
- production d'une tige en verre (10) avec une section transversale sélectionnée,
- chauffage de la tige en verre (10), de manière à rendre celle-ci au moins partiellement déformable,
- formage d'au moins un élément optique en verre (13) à partir du segment déformable au moyen d'un outil de moulage (3), ledit outil de moulage étant chauffé à une intensité telle que les surfaces de contact de l'élément optique en verre (13) sont polies par l'outil de moulage (3), la surface de l'élément optique en verre (13) étant chauffée jusqu'à ce que la surface plastique-ductile du verre soit réduite du fait de la tension superficielle et en devienne brillante,
- séparation de l'élément optique en verre (13) sur le point de jonction de la tige en verre (10),
- disposition d'une pluralité d'éléments optiques en verre (13) séparés pour former un groupe,
- rectification et/ou polissage d'au moins une partie des surfaces de séparation (13a, 13b) des éléments optiques en verre (13) groupés.

2. Procédé selon la revendication précédente, **caractérisé en ce que** la tige en verre (10) est produite par transformation primaire.

3. Procédé selon l'une des revendications précédentes, **caractérisé en ce que** la tige en verre (10) est produite par étirage.

4. Procédé selon l'une des revendications précédentes, **caractérisé par** un rapprochement de la section transversale de la tige en verre (10) par rapport à celle de l'élément optique en verre (13) à former.

5. Procédé selon l'une des revendications précédentes, **caractérisé par** une réduction de section transversale de la tige en verre (10) par étirage.

6. Procédé selon l'une des revendications précédentes, **caractérisé en ce que** la séparation des éléments optiques en verre (13) de la tige en verre (10) est effectuée par incision et/ou détachement thermique.

7. Procédé selon l'une des revendications précédentes, **caractérisé en ce qu'**une surface de séparation supérieure (13c) et une surface de séparation inférieure (13b) des éléments optiques en verre (13) groupés sont polies et/ou rectifiées simultanément.

8. Installation pour la fabrication d'éléments optiques en verre (13), comprenant :
- un dispositif de réception (8) avec des zones de réception pour des tiges en verre (10) optique,
- un dispositif d'amenée (1) des tiges en verre (10) vers les zones de réception,
- une unité de traitement composée d'au moins
un dispositif de chauffage (2) pour le chauffage des tiges en verre (10) dans une première zone de traitement, de manière à rendre les tiges en verre (10) au moins partiellement déformables,
un outil de moulage (3) pour le formage, dans une deuxième zone de traitement, d'au moins un élément optique en verre (13) à partir du segment déformable, l'outil de moulage comportant un moyen pour être chauffé à une intensité telle que les surfaces de contact de l'élément optique en verre (13) soient polies par l'outil de moulage (3), la surface de l'élément optique en verre (13) étant chauffée jusqu'à ce que la surface plastique-ductile du verre soit réduite du fait de la tension superficielle et en devienne brillante,
un moyen de séparation (4) de l'élément optique en verre (13) de la tige en verre (10) dans une troisième zone de traitement,
le dispositif de réception (8) étant déplaçable vers l'unité de traitement, de manière à permettre l'amenée cyclique des tiges en verre (10) vers le dispositif de chauffage (2), l'outil de moulage (3) et le moyen de séparation (4),
- un dispositif de réception (5) d'une pluralité d'éléments optiques en verre (13), permettant de former un groupe d'éléments optiques en verre (13), et
- un moyen de rectification et/ou de polissage (6, 7) pour la rectification et/ou le polissage d'au moins une partie des surfaces de séparation (13a, 13b) des éléments optiques en verre (13) groupés.

9. Installation pour la fabrication d'éléments optiques en verre (13), comprenant
- un dispositif d'amenée (1) d'une tige en verre (10) optique vers une zone de traitement,
- un dispositif de chauffage (2) pour le chauffage de la tige en verre (10), de manière à rendre la tige en verre (10) au moins partiellement déformable dans la zone de traitement,
- une unité de traitement composée d'au moins
un outil de moulage (3) pour le formage d'au moins un élément optique en verre (13) à partir du segment déformable dans la zone de traitement, l'outil de moulage comportant un moyen pour être chauffé à une intensité telle que les surfaces de contact de l'élément optique en verre (13) soient polies par l'outil de moulage (3), la surface de l'élément optique en verre (13) étant chauffée jusqu'à ce que la surface plastique-ductile du verre soit réduite du fait de la tension superficielle et en devienne brillante, et
un moyen de séparation (4) de l'élément optique en verre (13) de la tige en verre (10) dans la zone de traitement,
l'unité de traitement étant déplaçable vers la tige en verre (10), de manière à permettre l'amenée cyclique de l'outil de moulage (3) et du moyen de séparation (4) dans la zone de traitement,
- un dispositif de réception (5) d'une pluralité d'éléments optiques en verre (13) séparés, de manière à former un groupe d'éléments optiques en verre (13), et
un moyen de rectification et/ou de polissage (6, 7) pour la rectification et/ou le polissage d'au moins une partie des surfaces de séparation (13a, 13b) des éléments optiques en verre (13) groupés.
